# EUROPEAN PATENT APPLICATION

(11) **EP 4 403 376 A1**
(43) Date of publication of application: **24.07.2024**
(21) Application number: 23152697.1
(22) Date of filing: 20.01.2023
(51) Int. Cl.: B60B 3/02, B60B 3/14

(54) **A VEHICLE WHEEL**

(71) Applicant: Ningbo Geely Automobile Research & Development Co. Ltd., Hangzhou Bay New District Ningbo Zhejiang 315336 (CN); Zhejiang Geely Holding Group Co., Ltd., Hangzhou, Zhejiang 310051 (CN)
(72) Inventor: FADHLI, Hassine, 449 42 GÖTEBORG (SE); KRONQVIST, Per-Erik, 434 48 KUNGSBACKA (SE)
(74) Representative: Zacco Sweden AB

(57) **Abstract**

The invention relates to avehicle wheel (1) comprising a wheel hub arrangement (2) with a wheel hub arrangement surface (6) and a wheel rim (3) with a wheel rim surface (7). The wheel hub arrangement surface and the wheel rim surface are arranged to abut to each other when the wheel rim is mounted on the wheel hub arrangement. The wheel hub arrangement (2) is provided with a first engagement structure (17) and the wheel rim (3) is provided with a second engagement structure (18), wherein the first engagement structure and the second engagement structure are adapted to engage with each other, and wherein the wheel hub arrangement (2) and the wheel rim (3) are assemblable together to form the vehicle wheel (1), provided that the wheel hub arrangement and the wheel rim are mutually positioned such that the first engagement structure (17) and the second engagement structure (18) are engaged thereby enabling the wheel hub arrangement surface (6) and the wheel rim surface (7) to abut to each other.

## Description

### TECHNICAL FIELD

The invention relates to a vehicle wheel, a wheel hub arrangement, a brake disc and a wheel rim of such a vehicle wheel, and a vehicle having such vehicle hub arrangements.

### BACKGROUND

Vehicles can have different sizes of the wheels. For example, for one and the same vehicle it may be desirable to have differently sized wheels such that the rear wheels are wider than the front wheels. Further, today's wheels are often adapted to a certain rotation direction due to the design of the tread pattern of the tires.

This means that the wheels should not be mixed when assembled on the vehicle, but each wheel has to be assembled on a specific axle, such as a front or rear axle, and on a specific side of the vehicle, such as left or right side.

### SUMMARY

An objective of the invention is to provide a vehicle wheel, which vehicle wheel eliminates or at least reduces the risk of assembling the vehicle wheel in an incorrect position.

The objective is achieved by a vehicle wheel comprising a wheel hub arrangement with a wheel hub arrangement surface and a wheel rim with a wheel rim surface, wherein the wheel hub arrangement surface and the wheel rim surface are arranged to abut to each other when the wheel rim is mounted on the wheel hub arrangement, the wheel hub arrangement is provided with a first engagement structure and the wheel rim is provided with a second engagement structure, and the first engagement structure and the second engagement structure are adapted to engage with each other, and wherein the wheel hub arrangement and the wheel rim are assemblable together to form the vehicle wheel, provided that the wheel hub arrangement and the wheel rim are mutually positioned such that the first engagement structure and the second engagement structure are engaged thereby enabling the wheel hub arrangement surface and the wheel rim surface to abut to each other.

The invention is based on the insight that by such a vehicle wheel, a unique assembling position with respect to axle and/or side of the vehicle can be achieved for the wheel, thereby preventing the wheel from being assembled in an incorrect position. In other words; the wheel rim (with the tire) can only be mounted on a specific wheel hub arrangement where the wheel hub arrangement engagement structure and the wheel rim engagement structure match each other. Hereby, a mechanical poka-yoke or failsafe design is obtained.

Preferably, the wheel hub arrangement surface is provided with the first engagement structure and/or the wheel rim surface is provided with the second engagement structure.

One of the first engagement structure and the second engagement structure is preferably an axial protrusion and the other of the first engagement structure and the second engagement structure is preferably a recess for receiving the axial protrusion. For example, the first engagement structure can be the axial protrusion and the second engagement structure can be the recess.

Although there are advantages associated with the example embodiments shown hereinafter where the wheel hub arrangement has an axial protrusion and the wheel rim has a recess, it is emphasized that within the scope of the invention it would be possible to let these features change places with each other such that instead the wheel hub arrangement has the recess and the wheel rim has the axial protrusion.

According to a further embodiment, the axial protrusion is a pin, preferably a circular cylinder pin. Hereby, a wheel rim not having the corresponding recess for receiving the pin can be effectively prevented from being mounted to the wheel hub arrangement in a non-complicated way. At the same time, the wheel rim allowed to be mounted on the wheel hub arrangement can be provided with a recess with a minimum of impact on the wheel rim design.

According to a further embodiment, the axial protrusion is a guide pin guiding the radial position and/or the circumferential position of the wheel rim and the wheel hub arrangement relative to each other. Hereby, a wheel bolt pattern of the wheel hub arrangement and a wheel bolt pattern of the wheel rim can be correctly positioned to each other, i.e. overlapping each other, when the wheel rim is mounted to the wheel hub arrangement.

According to a further embodiment, the recess has an extension in the circumferential direction exceeding an extension of the axial protrusion in the circumferential direction such that the wheel hub arrangement and the wheel rim are at least somewhat pivotable relative to each other when the axial protrusion is received by the recess, the wheel hub arrangement and the wheel rim are centred relative to each other and the wheel hub arrangement surface and the wheel rim surface abut to each other. Hereby, the pivot position of the wheel rim relative to the wheel hub arrangement can be adjusted while the axial protrusion moves along the recess.

The wheel rim recess is preferably a groove of the wheel rim, wherein the groove has a main extension in the circumferential direction of the wheel rim, preferably extending along an entire circumference of the wheel rim.

According to a further embodiment, a distance in the radial direction between a centre of the wheel rim and the recess is substantially the same as the distance in the radial direction between the centre of the wheel rim and a wheel bolt pattern of the wheel rim. Hereby, the position of the recess is adapted to the usual radial position of a brake disc locating screw making it possible to use such a brake disc locating screw as the axial protrusion. At the same time, the recess can be arranged in an area where some material reduction of the wheel rim due to the recess can be accepted.

According to a further embodiment, the vehicle hub arrangement comprises a brake disc provided with the wheel hub arrangement surface. Hereby, an already existing component can be modified and used for an additional function. Since the brake disc can be provided with the first engagement structure, such as an axial protrusion, no redesign of the remaining part of the wheel hub arrangement is required for achieving the failsafe design.

According to a further embodiment, the vehicle hub arrangement comprises a brake disc locating screw, and the first engagement structure is constituted by at least a part of a screw head of the brake disc locating screw. Hereby, an already existing component can be modified and used for an additional function. The brake disc locating screw can be provided with an extended screw head protruding from the brake disc surface. In this way, no redesign of the wheel hub arrangement (including the brake disc) is required for achieving an axial protrusion of the wheel hub arrangement.

According to another aspect of the invention, the invention relates to a vehicle comprising a first wheel hub arrangement with a first wheel hub arrangement surface and a second wheel hub arrangement with a second wheel hub arrangement surface, wherein the first wheel hub arrangement surface is arranged to abut to a wheel rim surface of a first wheel rim when the first wheel rim is mounted on the first wheel hub arrangement, and the second wheel hub arrangement surface is arranged to abut to a wheel rim surface of a second wheel rim when the second wheel rim is mounted on the second wheel hub arrangement, and the first wheel hub arrangement is provided with an engagement structure to be engaged with an engagement structure of the first wheel rim, and the second wheel hub arrangement is provided with an engagement structure to be engaged with an engagement structure of the second wheel rim, and wherein the engagement structure of the first wheel hub arrangement and the engagement structure of the second wheel hub arrangement are different from each other with respect to the size, shape and/or position on the respective wheel hub arrangement.

The invention is based on the insight that by such a vehicle, unique wheel assembling positions with respect to axle and/or side of the vehicle can be achieved. Hereby, a set of wheel rims belonging to the vehicle can be designed with different engagement structures, such as wheel rim recesses, such that the first wheel rim is mountable on the first wheel hub arrangement only, and the second wheel rim is mountable on the second wheel hub arrangement only.

The engagement structure of the first wheel hub arrangement is preferably a first axial protrusion and the engagement structure of the second wheel hub arrangement is preferably a second axial protrusion.

According to one embodiment, a length of the first axial protrusion in the axial direction is different from a length of the second axial protrusion in the axial direction. Hereby, two wheel rims can be designed with wheel rim recesses having different depths such that one of the wheel rims will only be mountable to one of the first and second wheel hub arrangements.

According to a further embodiment, an extension of the first axial protrusion in the radial direction is different from an extension of the second axial protrusion in the radial direction. Hereby, two wheel rims can be designed with wheel rim recesses having different radial extensions such that one of the wheel rims will only be mountable to one of the first and second wheel hub arrangements.

According to a further embodiment, an extension of the first axial protrusion in the circumferential direction is different from an extension of the second axial protrusion in the circumferential direction. Hereby, two wheel rims can be designed with wheel rim recesses having different circumferential extensions such that one of the wheel rims will only be mountable to one of the first and second wheel hub arrangements.

According to a further embodiment, a distance in the radial direction between a centre of the first wheel hub arrangement and the first axial protrusion is different from a distance in the radial direction between a centre of the second wheel hub arrangement and the second axial protrusion. Hereby, two wheel rims can be designed with wheel rim recesses having different distances in the radial direction between a centre of the wheel rim and the recess such that one of the wheel rims will only be mountable to one of the first and second wheel hub arrangements.

According to a further embodiment, a distance in the circumferential direction between a wheel bolt pattern of the first wheel hub arrangement and the first axial protrusion is different from a distance in the circumferential direction between a wheel bolt pattern of the second wheel hub arrangement and the second axial protrusion. Hereby, two wheel rims can be designed with wheel rim recesses having different distances in the circumferential direction between a wheel bolt pattern of the wheel rim and the recess such that one of the wheel rims will only be mountable to one of the first and second wheel hub arrangements.

According to further aspects of the invention, the invention also relates to a wheel hub arrangement for co-operation with the wheel rim of the vehicle wheel according to claim 1, a brake disc for co-operation with the wheel rim of the vehicle wheel according to claim 1, and to a wheel rim for co-operation with the wheel hub arrangement of the vehicle wheel according to claim 1.

The advantages of the wheel hub arrangement, brake disc and the wheel rim are similar to the advantages already discussed hereinabove with reference to the vehicle wheel and the vehicle.

Further advantages and advantageous features of the invention are disclosed in the following description and in the claims.

### BRIEF DESCRIPTION OF THE DRAWINGS

With reference to the appended drawings, below follows a more detailed description of embodiments of the invention cited as examples.

In the drawings:
Fig. 1 is a cut perspective view of a vehicle wheel,
Fig. 1A is a plane view showing an enlarged part of the vehicle wheel in Fig. 1A,
Fig. 1B is a plane view showing an alternative embodiment of the vehicle wheel,
Fig. 2 is a perspective view of a wheel hub arrangement,
Fig. 3 is a perspective view of a wheel rim,
Fig. 3A shows an enlarged part of the wheel rim in Fig. 3,
Fig. 4A is a plane view showing a part of a vehicle wheel having a wheel hub arrangement,
Fig. 4B is a plane view showing a part of a further vehicle wheel having a wheel hub arrangement,
Figs. 5A and 5B show a further embodiment of two different wheel hub arrangements of a vehicle,
Figs. 6A and 6B show two different wheel rims for the wheel hub arrangements in Figs. 5A and 5B,
Figs. 7A and 7B show a further embodiment of two different wheel hub arrangements of a vehicle, and
Figs. 8A and 8B show two different wheel rims for the wheel hub arrangements in Figs. 7A and 7B.

### DETAILED DESCRIPTION OF EXAMPLE EMBODIMENTS

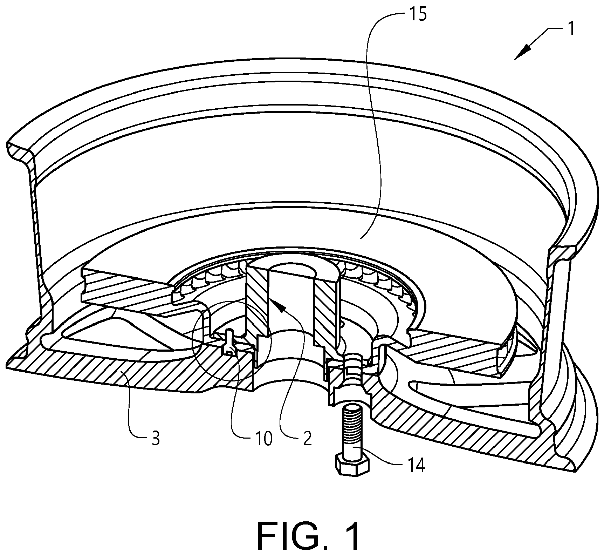

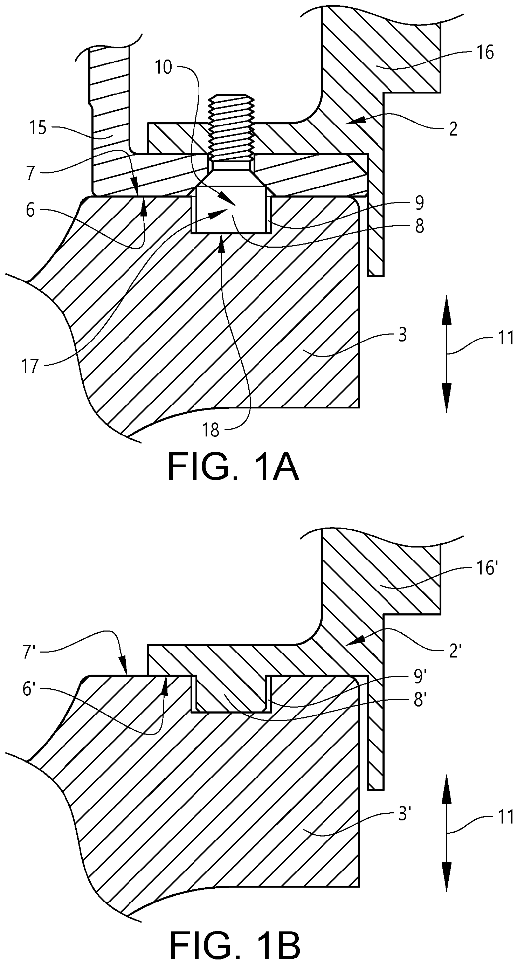

Fig. 1 is a cut perspective view showing a vehicle wheel 1 having a wheel hub arrangement 2 and a wheel rim 3 mounted to the wheel hub arrangement 2. Fig. 1A is a plane view of a part of the vehicle wheel 1 where an interface between the wheel hub arrangement 2 and the wheel rim 3 is shown.

The wheel rim 3 can be attached to and detached from the wheel hub arrangement 2 by wheel screws 14 or wheel nuts, also called lug bolts/nuts or wheel bolts/nuts.

A number of such wheel screws 14 or nuts, often 4-5 wheel screws or nuts, are usually arranged at the same radial distance from a centre of the wheel, i.e. at the same diameter, with same circumferential distances between each pair of adjacent wheel screws or nuts, for mounting the wheel rim (provided with a tire) to the wheel hub arrangement.

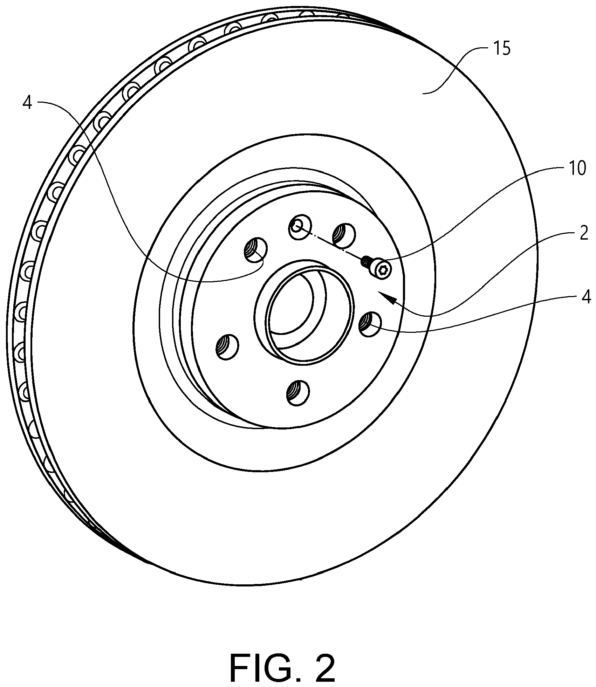

As appears from Fig. 1A, and from Fig. 2 showing the wheel hub arrangement 2 without the wheel rim 3, the wheel hub arrangement 2 comprises a hub unit 16 and a brake disc 15. The hub unit 16 is provided with threaded holes 4 for the wheel screws 14 or with threaded pins (wheel studs) for wheel nuts. The brake disc 15 is provided with corresponding through holes for the wheel screws.

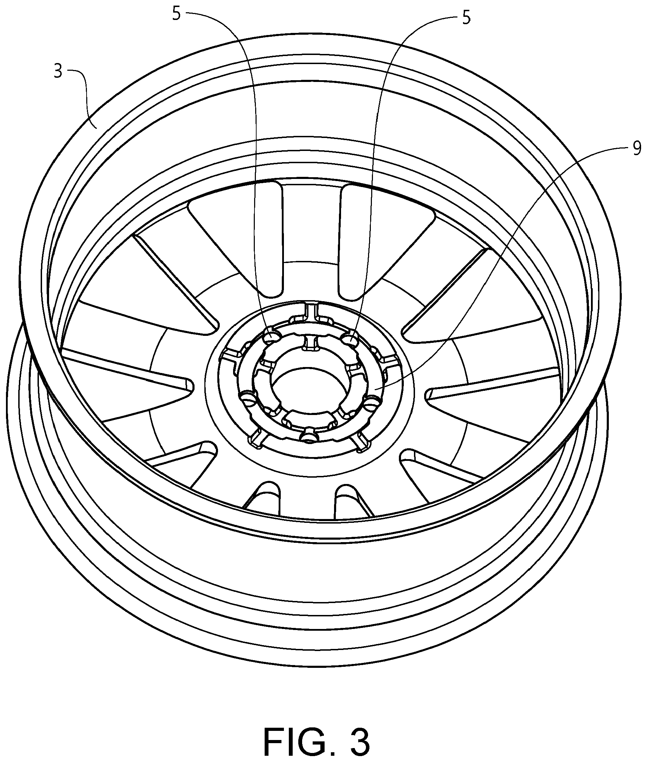

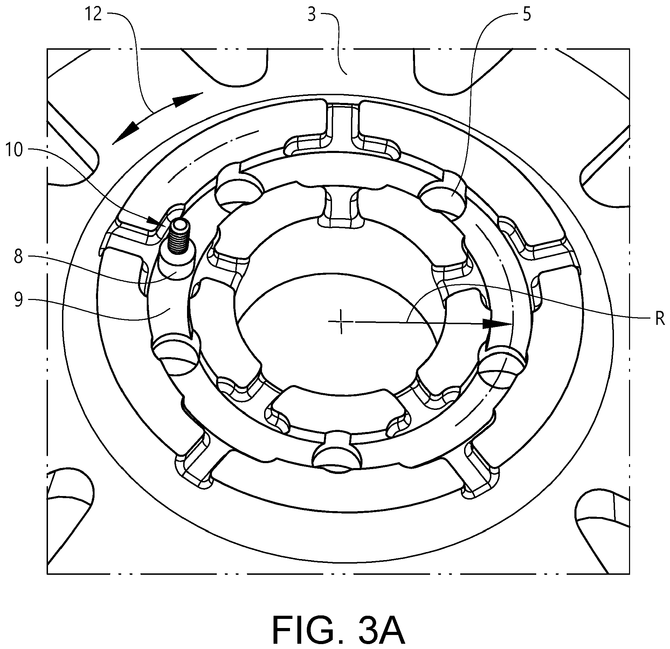

Further, as appears from Fig. 3, the wheel rim 3 is provided with corresponding through holes 5 for receiving the wheel screws 14 (or the threaded pins).

By "wheel bolt pattern" is meant the pattern of the through holes 5 in the wheel rim 3 or the pattern of threaded holes 4 (or threaded pins) of the wheel hub arrangement 2.

Although in the example embodiment illustrated in Figs. 1 and 1A, the wheel hub arrangement 2 comprises the brake disc 15 arranged between the hub unit 16 and the wheel rim 3, where the brake disc 15 constitutes an intermediate component to which the wheel rim 3 is to be mounted, other solutions are also possible where the brake disc is attached in a different way or is excluded.

The wheel hub arrangement 2 has a wheel hub arrangement surface 6 and the wheel rim 3 has a wheel rim surface 7. The wheel hub arrangement surface 6 and the wheel rim surface 7 are arranged to abut to each other when the wheel rim 3 is mounted on the wheel hub arrangement 2 as illustrated in Fig. 1A. The brake disc 15 can be provided with the wheel hub arrangement surface 6.

The wheel hub arrangement 2 is provided with a first engagement structure 17 and the wheel rim 3 is provided with a second engagement structure 18. The first engagement structure 17 and the second engagement structure 18 are designed and adapted to engage with each other. The wheel hub arrangement 2 and the wheel rim 3 are assemblable together to form the vehicle wheel 1, provided that the wheel hub arrangement 2 and the wheel rim 3 are mutually positioned such that the first engagement structure 17 and the second engagement structure 18 are engaged thereby enabling the wheel hub arrangement surface 6 and the wheel rim surface 7 to abut to each other.

The first engagement structure 17 can be an axial protrusion 8 and the second engagement structure 18 can be a recess 9. For example, the wheel hub arrangement surface 6 is provided with the axial protrusion 8 and the wheel rim surface 7 is provided with the recess 9. The wheel hub arrangement 2 and the wheel rim 3 are assemblable together to form the vehicle wheel 1, provided that the wheel hub arrangement 2 and the wheel rim 3 are mutually positioned such that the axial protrusion 8 is received by the recess 9 thereby enabling the wheel hub arrangement surface 6 and the wheel rim surface 7 to abut to each other. When the wheel hub arrangement surface 6 and the wheel rim surface 7 abut to each other, the wheel screws 14 or nuts can be tightened so as to attach the wheel rim 3 to the wheel hub arrangement 2 properly.

Although the axial protrusion 8 can be an integrated portion of the wheel hub arrangement surface, the axial protrusion 8 can also be a component attached to the wheel hub arrangement 2, such as a pin, preferably a circular cylinder pin, projecting from the wheel hub arrangement 2, for example from the wheel hub arrangement surface 6.

In the example embodiment illustrated in Figs. 1 and 1A, the vehicle hub arrangement 2 comprises the brake disc 15 provided with the wheel hub arrangement surface 6. The vehicle hub arrangement 2 comprises a brake disc locating screw 10, and the first engagement structure 17 is constituted by at least a part of a screw head of the brake disc locating screw 10. Such a brake disc locating screw 10 is usually used as a mounting aid in order to ensure that the brake disc 15 is positioned correctly on the hub unit 16. See also Fig. 2 showing the brake disc locating screw 10.

The brake disc locating screw 10 shown in Fig. 1A is extended in comparison to a conventional brake disc locating screw such that the screw head forms the axial protrusion 8 protruding from the brake disc 15 of the wheel hub arrangement 2. For example, the screw head 8 can be extended in an axial direction 11 to protrude outside the wheel hub arrangement surface 6, whereas for a conventional brake disc locating screw, the screw head is fully arranged in a counterbore of the wheel hub arrangement surface such that the screw head is arranged inside the brake disc surface or in other words; an outer surface of a screw head of a conventional brake disc locating screw is flush with the brake disc surface.

The axial protrusion 8 can be a guide pin guiding the radial position and/or the circumferential position of the wheel rim relative to the wheel hub arrangement when the wheel rim is mounted to the wheel hub arrangement.

Fig. 1B illustrates an alternative embodiment of the vehicle wheel 1' where the brake disc is excluded. As previously described, the wheel hub arrangement 2' has the wheel hub arrangement surface 6'. The hub unit 16' is provided with the wheel hub arrangement surface 6'. The axial protrusion 8' protrudes from wheel hub arrangement surface 6'. Further, the wheel rim 3' has the wheel rim surface 7' and the wheel rim surface 7' is provided with the recess 9' receiving the axial protrusion 8'. In this alternative embodiment, the axial protrusion 8' can be an integrated portion of the hub unit 16'.

As appears from Figs. 3 and 3A, the wheel rim recess 9 suitably has an extension in the circumferential direction 12 exceeding an extension of the wheel hub arrangement protrusion 8 in the circumferential direction 12 such that the wheel rim 3 is at least somewhat pivotable relative to the wheel hub arrangement 2 when the wheel hub arrangement protrusion 8 is received by the wheel rim recess 9, and the wheel hub arrangement 2 and the wheel rim 3 are centred relative to each other and the wheel rim surface 7 and the wheel hub arrangement surface 6 abut to each other.

In this example embodiment illustrated in Figs. 3 and 3A, the wheel rim recess is a groove 9 having a main extension in the circumferential direction 12 of the wheel rim 3, and preferably the groove 9 extends along an entire circumference of the wheel rim 3. The groove 9 suitably has circular shape. The size of the screw head 8 of the brake disc locating screw 10 and the size of the groove 9 are adapted to each other, i.e. the diameter of the screw head 8 is adapted to the width of the groove 9, and the axial extension of the screw head 8 is adapted to the depth of the groove 9 such that the screw head 8 can be received by the groove 9. When the screw head 8 is received by the groove 9, the wheel rim 3 can be pivoted relative to the wheel hub arrangement 2 such that through holes 5 of the wheel rim 3 can be aligned with the threaded holes 4 of the hub unit 16 (and the through holes of the brake disc 15).

A distance R in the radial direction between a centre of the wheel rim and the wheel rim recess is substantially the same as the distance in the radial direction between the centre of the wheel rim and a wheel bolt pattern of the wheel rim.

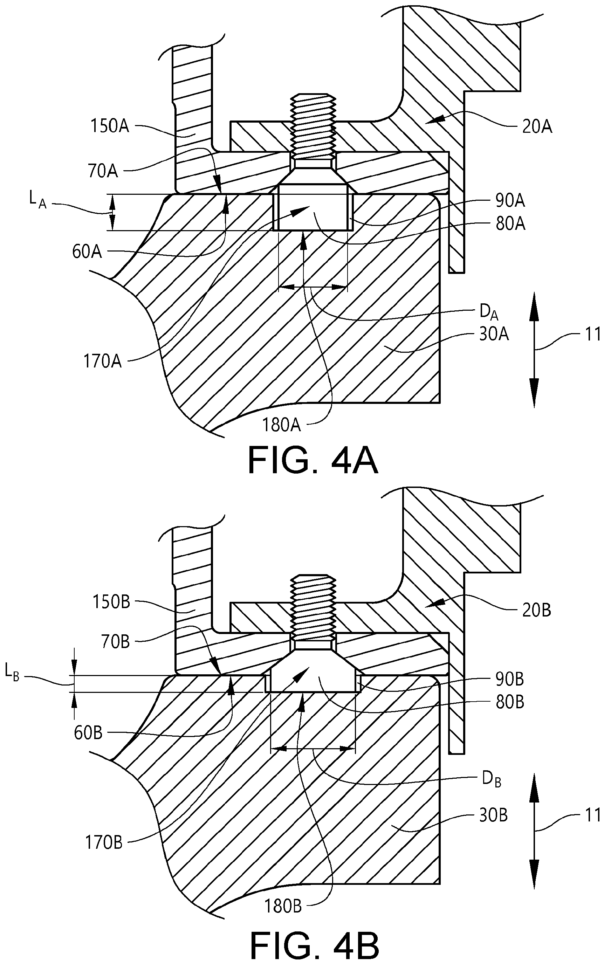

Figs. 4A and 4B are schematic views showing parts of two different vehicle wheels having different hub arrangements 20A, 20B which can be arranged on the same vehicle. As previously described, each wheel hub arrangement 20A, 20B comprises a brake disc 150A, 150B. The vehicle comprises a first wheel hub arrangement 20A with a first wheel hub arrangement surface 60A constituted by a surface of a first brake disc 150A and a second wheel hub arrangement 20B with a second wheel hub arrangement surface 60B constituted by a surface of a second brake disc 150B. The first wheel hub arrangement 20A can be arranged on a front axle of the vehicle and the second wheel hub arrangement 20B can be arranged on a rear axle of the vehicle.

The first wheel hub arrangement surface 60A is arranged to abut to a wheel rim surface 70A of a first wheel rim 30A when the first wheel rim 30A is mounted on the first wheel hub arrangement 20A, and the second wheel hub arrangement surface 60B is arranged to abut to a wheel rim surface 70B of a second wheel rim 30B when the second wheel rim 30B is mounted on the second wheel hub arrangement 20B.

The first wheel hub arrangement 20A is provided with an engagement structure 170A to be engaged with an engagement structure 180A of the first wheel rim 30A, and the second wheel hub arrangement 20B is provided with an engagement structure 170B to be engaged with an engagement structure 180B of the second wheel rim 30B. The engagement structure 170A of the first wheel hub arrangement 20A and the engagement structure 170B of the second wheel hub arrangement 20B are different from each other with respect to the size, shape and/or position on the respective wheel hub arrangement 20A, 20B. The first wheel hub arrangement 20A can be provided with a first axial protrusion 80A to be received by a recess 90A of the first wheel rim 30A, and the second wheel hub arrangement 20B can be provided with a second axial protrusion 80B to be received by a recess 90B of the second wheel rim 30B.

The engagement structure 170A of the first wheel hub arrangement 20A and the engagement structure 170B of the second wheel hub arrangement 20B are different so as to match different wheel rims 30A, 30B.

The first axial protrusion 80A and the second axial protrusion 80B are different from each other with respect to the size, shape and/or position on the respective wheel hub arrangement 20A, 20B.

For example, a length of the first axial protrusion 80A in the axial direction 11 can be different from a length of the second axial protrusion 80B in the axial direction and/or an extension of the first axial protrusion 80A in the radial direction R (see also Fig. 3A) can be different from an extension of the second axial protrusion 80B in the radial direction R and/or an extension of the first axial protrusion 80A in the circumferential direction 12 can be different from an extension of the second axial protrusion 80B in the circumferential direction 12.

In the example embodiment illustrated in Figs. 4A and 4B, the first and second axial protrusions 80A, 80B are screw heads with different dimensions. Each screw head can be part of a brake disc locating screw 10 as previously explained.

The first axial protrusion 80A can be a screw head with a first diameter D_{A} and a first protruding length L_{A}, and the second axial protrusion 80B can be a screw head with a second diameter D_{B} and a second protruding length L_{B}.

By selecting the dimensions of the screw heads, such that the first diameter D_{A} is smaller than the second diameter D_{B}, a wheel rim with a recess width exceeding the first diameter but less than the second diameter will be mountable on the first wheel hub arrangement 20A (first brake disc 150A) but not on the second wheel hub arrangement 20B (second brake disc 150B).

Further, by selecting the dimensions of the screw heads, such that the first protruding length L_{A} is larger than the second protruding length L_{B}, a wheel rim with a recess depth exceeding the second length L_{B} but less than the first length L_{A} will be mountable on the second wheel hub arrangement 20B (second brake disc 150B) but not on first wheel hub arrangement 20A (first brake disc 150A).

In other words; the first wheel hub arrangement 20A requires a larger depth of the wheel rim recess 90A to be mountable on the first wheel hub arrangement 20A (first brake disc 150A), and the second wheel hub arrangement 20B requires a larger width of the wheel rim recess 90B to be mountable on the second wheel hub arrangement 20B (second brake disc 150B).

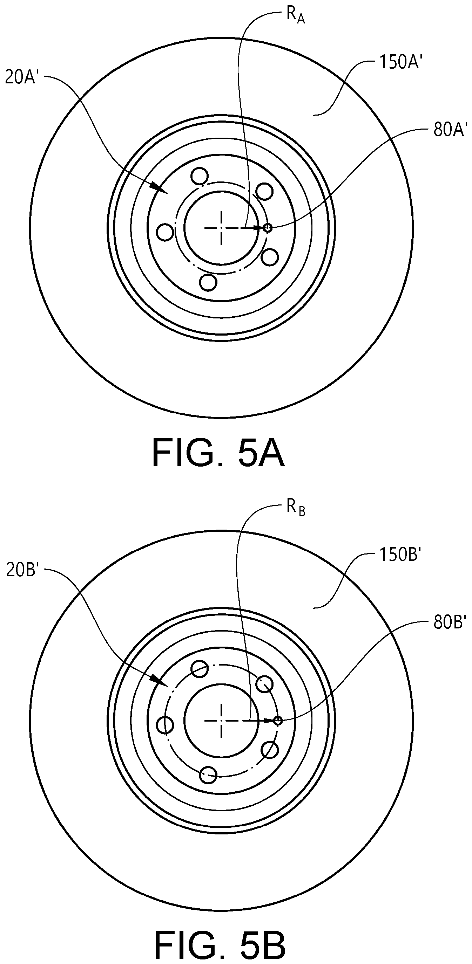

Figs. 5A and 5B show a further example embodiment of two different wheel hub arrangements 20A', 20B' which can be arranged on the same vehicle. As previously described, each wheel hub arrangement 20A', 20B' comprises a brake disc 150A', 150B'. The vehicle comprises a first wheel hub arrangement 20A' where a distance R_{A} in the radial direction between a centre of the first wheel hub arrangement 20A' and the first axial protrusion 80A' is different from a distance R_{B} in the radial direction between a centre of the second wheel hub arrangement 20B' and the second axial protrusion 80B'. The first wheel hub arrangement 20A' can have a locator pin 80A' arranged at the first radius R_{A} and the second wheel hub arrangement 20B' can have a locator pin 80B' arranged at the second radius R_{B} where the first radius R_{A} is smaller than the second radius R_{B}.

The first wheel hub arrangement 20A' requires a wheel rim recess of the first wheel rim to match the first radius R_{A} to make the first wheel rim mountable on the first wheel hub arrangement, and the second wheel hub 20B' requires a wheel rim recess of the second wheel rim to match the second radius R_{B} to make the second wheel rim mountable on the second wheel hub arrangement.

By adapting the recesses of the first and second wheel rims, i.e. the distances from the centre of the wheel rim to the recess, to the current radius R_{A}, R_{B} of the wheel hub arrangements, the first wheel rim can be designed to be mountable on the first wheel hub arrangement (first brake disc) only, and the second wheel rim can be designed to be mountable on the second wheel hub arrangement (second brake disc) only.

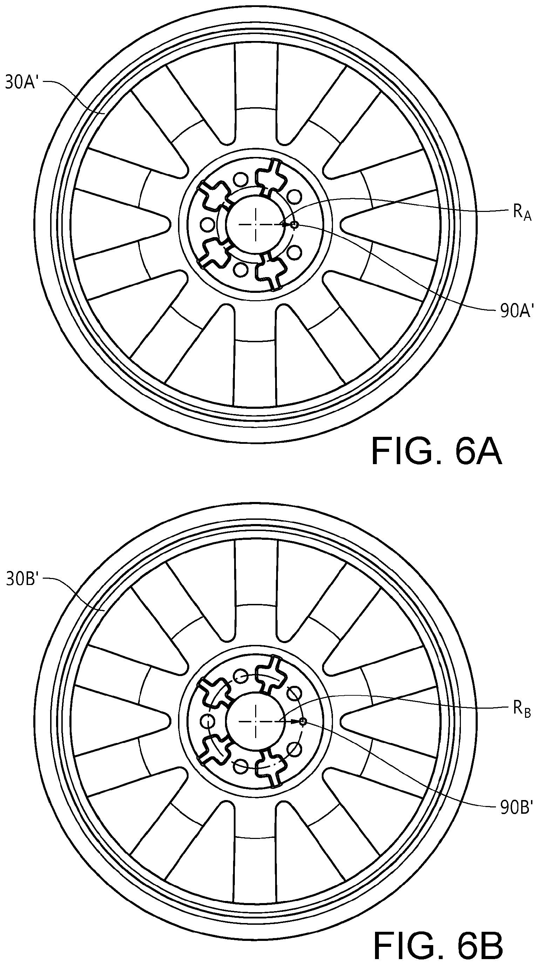

See also Figs. 6A and 6B showing the wheel rims 30A', 30B' designed with recesses 90A', 90B' to match the first wheel hub arrangement 20A' (first brake disc 150A') and the second wheel hub arrangement 20B' (second brake disc 150B'), respectively.

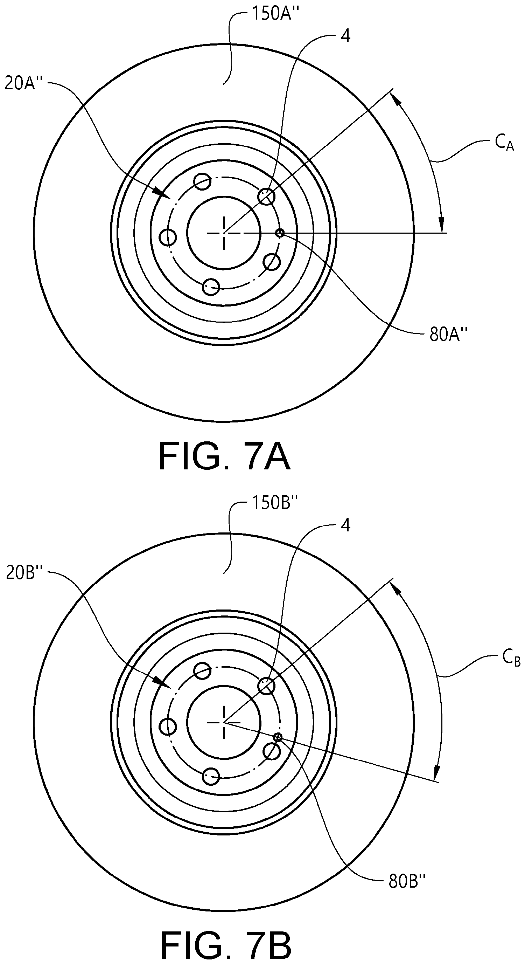

Figs. 7A and 7B show a further example embodiment of two different wheel hub arrangements 20A", 20B" which can be arranged on the same vehicle. As previously described, each wheel hub arrangement 20A", 20B" is provided with a brake disc 150A", 150B". The vehicle comprises a first wheel hub arrangement 20A" where a distance C_{A} (angle) in the circumferential direction 12 between a wheel bolt pattern of the first wheel hub arrangement 20A" and the first axial protrusion 80A" of the first wheel hub arrangement 20A", is different from a distance C_{B} (angle) in the circumferential direction 12 between a wheel bolt pattern of the second wheel hub arrangement 20B" and the second axial protrusion 80B" of the second wheel hub arrangement 20B". The first wheel hub arrangement 20A" can have a locator pin 80A" arranged at the first angle C_{A} relative to a first threaded hole 4 of the wheel bolt pattern of the first wheel hub arrangement 20A", and the second wheel hub arrangement 20B" can have a locator pin 80B" arranged at the second angle C_{B} relative to a corresponding first threaded hole 4 of the wheel bolt pattern of the second wheel hub arrangement 20B", where the first angle C_{A} is smaller than the second angle C_{B}.

By adapting the recesses of the first and second wheel rims, i.e. the distances from a wheel bolt pattern of the wheel rim to the recess, to the current angles C_{A}, C_{B} of the wheel hub arrangements, the first wheel rim can be designed to be mountable on the first wheel hub arrangement (first brake disc) only, and the second wheel rim can be designed to be mountable on the second wheel hub arrangement (second brake disc) only.

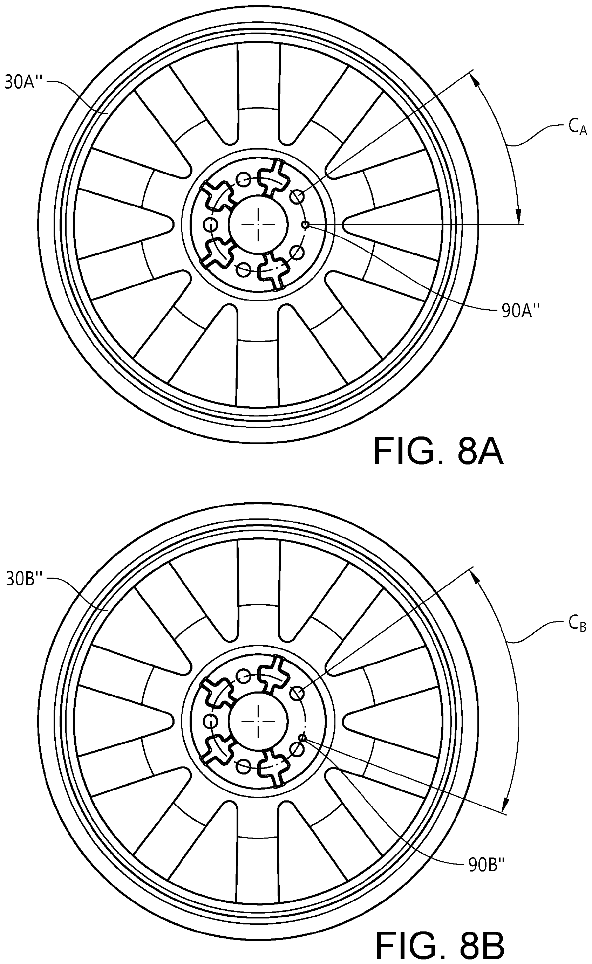

See also Figs. 8A and 8B showing the wheel rims 30A", 30B" designed with recesses 90A", 90B" to match the first wheel hub arrangement 20A" (first brake disc 150A") and the second wheel hub arrangement 20B" (second brake disc 150B"), respectively.

It is to be understood that the present invention is not limited to the embodiments described above and illustrated in the drawings; rather, the skilled person will recognize that many changes and modifications may be made within the scope of the appended claims.

## Claims

1. A vehicle wheel (1) comprising a wheel hub arrangement (2) with a wheel hub arrangement surface (6) and a wheel rim (3) with a wheel rim surface (7), the wheel hub arrangement surface and the wheel rim surface being arranged to abut to each other when the wheel rim is mounted on the wheel hub arrangement, **characterized in that** the wheel hub arrangement (2) is provided with a first engagement structure (17) and the wheel rim (3) is provided with a second engagement structure (18), the first engagement structure and the second engagement structure being adapted to engage with each other, wherein the wheel hub arrangement (2) and the wheel rim (3) are assemblable together to form the vehicle wheel (1), provided that the wheel hub arrangement and the wheel rim are mutually positioned such that the first engagement structure (17) and the second engagement structure (18) are engaged thereby enabling the wheel hub arrangement surface (6) and the wheel rim surface (7) to abut to each other.

2. A vehicle wheel (1) according to claim 1, **characterized in that** one of the first engagement structure (17) and the second engagement structure (18) is an axial protrusion (8) and the other of the first engagement structure and the second engagement structure is a recess (9) for receiving the axial protrusion.

3. A vehicle wheel (1) according to claim 2, **characterized in that** the first engagement structure (17) is the axial protrusion (8) and the second engagement structure (18) is the recess (9).

4. A vehicle wheel (1) according to any of claims 2 and 3, **characterized in that** the axial protrusion (8) is a pin, preferably a circular cylinder pin.

5. A vehicle wheel (1) according to any of claims 2-4, **characterized in that** the axial protrusion (8) is a guide pin guiding the radial position and/or the circumferential position of the wheel rim (3) and the wheel hub arrangement (2) relative to each other.

6. A vehicle wheel (1) according to any of claims 2-5, **characterized in that** the recess (9) has an extension in the circumferential direction exceeding an extension of the axial protrusion (8) in the circumferential direction such that the wheel hub arrangement (2) and the wheel rim (3) are at least somewhat pivotable relative to each other when the axial protrusion is received by the recess, the wheel hub arrangement (2) and the wheel rim (3) are centred relative to each other and the wheel hub arrangement surface (6) and the wheel rim surface (7) abut to each other.

7. A vehicle wheel (1) according to claim 3, **characterized in that** the recess (9) is a groove of the wheel rim (3), the groove having a main extension in the circumferential direction (12) of the wheel rim, preferably extending along an entire circumference of the wheel rim.

8. A vehicle wheel (1) according to claim 3 or 7, **characterized in that** a distance (R) in the radial direction between a centre of the wheel rim (3) and the recess (9) is substantially the same as the distance in the radial direction between the centre of the wheel rim and a wheel bolt pattern of the wheel rim.

9. A vehicle wheel (1) according to any preceding claim, **characterized in that** the wheel hub arrangement surface (6) is provided with the first engagement structure (17).

10. A vehicle wheel (1) according to any preceding claim, **characterized in that** the wheel rim surface (7) is provided with the second engagement structure (18).

11. A vehicle wheel (1) according to any preceding claim, **characterized in that** the vehicle hub arrangement (2) comprises a brake disc (15) provided with the wheel hub arrangement surface (6).

12. A vehicle wheel (1) according to claim 11, **characterized in that** the vehicle hub arrangement (2) comprises a brake disc locating screw (10), and the first engagement structure (17) is constituted by at least a part of a screw head of the brake disc locating screw (10).

13. A vehicle wheel (1) according to any of claims 1-10, **characterized in that** the vehicle hub arrangement (2') comprises a hub unit (16') provided with the wheel hub arrangement surface (6').

14. A vehicle comprising a first wheel hub arrangement (20A) with a first wheel hub arrangement surface (60A) and a second wheel hub arrangement (20B) with a second wheel hub arrangement surface (60B), the first wheel hub arrangement surface being arranged to abut to a wheel rim surface (70A) of a first wheel rim (30A) when the first wheel rim is mounted on the first wheel hub arrangement, the second wheel hub arrangement surface (60B) being arranged to abut to a wheel rim surface (70B) of a second wheel rim (30B) when the second wheel rim is mounted on the second wheel hub arrangement, **characterized in that** the first wheel hub arrangement (20A) is provided with an engagement structure (170A) to be engaged with an engagement structure (180A) of the first wheel rim, and the second wheel hub arrangement (20B) is provided with an engagement structure (170B) to be engaged with an engagement structure (180B) of the second wheel rim, wherein the engagement structure (170A) of the first wheel hub arrangement and the engagement structure (170B) of the second wheel hub arrangement are different from each other with respect to the size, shape and/or position on the respective wheel hub arrangement.

15. A vehicle according to claim 14, **characterized in that** the engagement structure (170A) of the first wheel hub arrangement (20A) is a first axial protrusion (80A) and the engagement structure (170B) of the second wheel hub arrangement (20B) is a second axial protrusion (80B).

16. A vehicle according to claim 15, **characterized in that** a length (L_{A}) of the first axial protrusion (80A) in the axial direction is different from a length (L_{B}) of the second axial protrusion (80B) in the axial direction.

17. A vehicle according to claim 15 or 16, **characterized in that** an extension of the first axial protrusion (80A) in the radial direction is different from an extension of the second axial protrusion (80B) in the radial direction.

18. A vehicle according to any of claims 15-17, **characterized in that** an extension of the first axial protrusion (80A) in the circumferential direction is different from an extension of the second axial protrusion (80B) in the circumferential direction.

19. A vehicle according to any of claims 15-18, **characterized in that** a distance (R_{A}) in the radial direction between a centre of the first wheel hub arrangement (20A') and the first axial protrusion (80A') is different from a distance (R_{B}) in the radial direction between a centre of the second wheel hub arrangement (20B') and the second axial protrusion (80B').

20. A vehicle according to any of claims 15-19, **characterized in that** a distance (C_{A}) in the circumferential direction between a wheel bolt pattern of the first wheel hub arrangement (20A") and the first axial protrusion (80A") is different from a distance (C_{B}) in the circumferential direction between a wheel bolt pattern of the second wheel hub arrangement (20B") and the second axial protrusion (80B").

21. A wheel hub arrangement (2) for co-operation with the wheel rim (3) of the vehicle wheel (1) according to claim 1, wherein the wheel hub arrangement (2) has an engagement structure (17) engaged with the engagement structure (18) of the wheel rim when the wheel rim is mounted on the wheel hub arrangement such that the wheel hub arrangement surface (6) and the wheel rim surface (7) abut to each other.

22. A brake disc (15) for co-operation with the wheel rim (3) of the vehicle wheel (1) according to claim 1, wherein the brake disc (15) has an engagement structure (17) engaged with the engagement structure (18) of the wheel rim when the wheel rim is mounted on the brake disc such that the wheel hub arrangement surface (6) and the wheel rim surface (7) abut to each other.

23. A wheel rim (3) for co-operation with the wheel hub arrangement (2) of the vehicle wheel (1) according to claim 1, wherein the wheel rim (3) has an engagement structure (18) engaged with the engagement structure (17) of the wheel hub arrangement when the wheel rim is mounted on the wheel hub arrangement such that the wheel hub arrangement surface (6) and the wheel rim surface (7) abut to each other.
